# EUROPEAN PATENT APPLICATION

(11) **EP 2 372 709 A1**
(43) Date of publication of application: **05.10.2011**
(21) Application number: 10305329.4
(22) Date of filing: 30.03.2010
(51) Int. Cl.: G11B 7/013, G11B 7/24

(54) **Optical storage medium comprising a data layer with reduced track pitch and an inverted/non-inverted mark/space data structure**

(71) Applicant: Thomson Licensing, 92130 Issy-les-Moulineaux (FR)
(72) Inventor: Pilard, Gael, 78087 Mönchweiler (DE); von Riewel, Larissa, 78050, VS-Villingen (DE)
(74) Representative: Arnold, Klaus-Peter

(57) **Abstract**

The optical storage medium (10) comprises a substrate layer (2), a read-only data layer (3) with a mark/space structure arranged in tracks on the substrate layer (2), wherein alternatingly one track (T1, T3) comprises positive marks (PM) as protrusions and an adjacent track (T2) comprises negative marks (NM) as depressions, a cover layer (7), a super-resolution layer (4) arranged between the data layer (3) and the cover layer (7), and an active layer (8) arranged between the data layer (3) and the nonlinear layer (4), which active layer (8) covers completely only tracks (T2, T4) comprising depressions. The nonlinear material comprises in particular a phase-change material.

## Description

### TECHNICAL FIELD OF THE INVENTION

The present invention relates to an optical storage medium comprising a substrate layer, a data layer and a nonlinear layer with a super-resolution structure arranged above the data layer. The data layer comprises in particular pits and lands having a size above a optical resolution limit and pits and lands having a size below said optical resolution limit of a pickup for reading of the data as arranged on the data layer.

### BACKGROUND OF THE INVENTION

Optical storage media are media in which data are stored in an optically readable manner, for example by means of a laser and an optical detector, for example a photodetector, being integrated within a pickup. The detector is used for detecting reflected light of the laser beam when reading data on the storage medium. In the meanwhile a large variety of optical storage media are known, which are operated with different laser wavelength, and which have different sizes for providing storage capacities from below one Gigabyte up to 50 Gigabyte (GB). The formats include read-only formats such as Audio CD and Video DVD, write-once optical media such as CD-R and DVD-R, DVD+R, as well as rewritable formats like CD-RW, DVD-RW and DVD+RW. Digital data are stored on these media along tracks in one or more layers of the media.

The storage medium with the highest data capacity is at present the Blu-Ray disc (BD), which allows to store up to about 50 GB on a dual layer disc. For reading and writing of a Blu-Ray disc an optical pickup with a laser wavelength of 405 nm and a numerical aperture of 0,85 is used. On the Blu-Ray disc a track pitch of 320 nm and a mark length from 2T to 8T or 9T is used, where T is the channel bit length and wherein 2T corresponds with a minimum mark length of 138, 149 or 160 nm.

The diffraction limit of optical instruments as described by the Abbe theory is about lambda/2NA, which is 238nm for a Blu-Ray type pickup having a laser wavelength lambda=405nm and a numerical aperture NA=0,85. For the optical resolution limit of a pickup for the readout of the high frequency (HF) data signal of a Blu-Ray disc, a higher resolution can be obtained when the laser beam moves over the pits and lands of a track on the Blu-Ray disc. This theoretical minimal detectable length is corresponding to a period of the pattern function, which is formed of a pit and of a land having the same length. The theoretically smallest detectable element of such a system is therefore a pit or a land having a length of lambda/4NA, so for a Blu-Ray type pickup, having a length of about 120nm.

New optical storage media with a super-resolution structure offer the possibility to increase the data density of the optical storage medium by a factor of two to four in one dimension as compared with the Blu-Ray disc. This is possible by including a nonlinear layer, which is placed above a data layer of the optical storage medium, and which significantly reduces the effective size of a light spot used for reading from or writing to the optical storage medium. The nonlinear layer can be understood as a mask layer because it is arranged above the data layer and for some specific materials only the high intensity center part of a laser beam can penetrate the mask layer. Further, semiconductor materials can be used as a nonlinear layer, e.g. InSb, which show a higher reflectivity in the center part of the focused laser beam, and which center reflectivity is dependent on the pit structure of the corresponding data layer. Therefore, the super-resolution effect allows to record and read data stored in marks of an optical disc, which have a size below the optical resolution limit of lambda/4NA of a corresponding optical pickup.

The nonlinear layer is often called a super-resolution near-field structure (Super-RENS) layer because it is assumed that for some specific materials, the optical effect of reducing the effective spot size of the laser beam is based on a near-field interaction between the marks and spaces of the data layer and the nonlinear layer. Super-RENS optical discs are known comprising a super resolution near-field structure formed of a metal oxide, a polymer compound or a phase-change layer comprising GeSbTe or AgInSbTe.

In WO 2008/046777 an optical storage medium is disclosed comprising a substrate layer, a read-only data layer having tracks, which comprise alternatively positive marks arranged as protrusions and negative marks arranged as depressions on the data layer. The tracks are arranged as spirals wherein one spiral contains a track with only positive marks and a neighbouring spiral contains tracks with only negative marks. The optical storage medium comprises advantageously a super-resolution layer and has a track pitch below the optical resolution limit of a corresponding pickup for reading of the data, for providing a high data capacity.

### BRIEF SUMMARY OF THE INVENTION

The optical storage medium comprises a substrate layer, a read only data layer with a mark/space structure arranged in tracks on the substrate layer, a cover layer and a super-resolution layer arranged between the data layer and the cover layer. The tracks are arranged such that alternatingly one track comprises positive marks as protrusions and an adjacent track comprises negative marks as depressions. The super-resolution layer comprises a non-linear material providing a destructive interference for negative marks and spaces having a size below an optical resolution limit, with regard to negative marks and spaces having a size above the optical resolution limit. In addition, an active layer is arranged between the data layer and the nonlinear layer, which active layer covers completely in particular the tracks comprising the negative marks, but not the tracks comprising the positive marks. The active layer has the function to inverse the super-resolution signal originating from the negative marks and spaces having a size below the optical resolution limit of a corresponding pickup for reading of the data, due to the properties of the nonlinear material of the super-resolution layer.

In a preferred embodiment, the active layer comprises a semiconductor material having an increased reflectivity, when irradiated with a laser beam. The semiconductor material is in particular one of the III-V semiconductor family, for example GaSb or an indium alloy like InAs or InSb. As an alternative, the active layer comprises a reflecting material, e.g. aluminum or silver. In a further aspect of the invention, the nonlinear material comprises a phase-change material, e.g. chalcogenide material like GeSbTe or AgInSbTe.

For read-only super-resolution optical storage media comprising a phase-change material as a super-resolution layer, it has been found that the negative marks and lands having a size below the optical resolution of a corresponding pickup provide an inverted data signal with regard to negative marks and lands having a size above the optical resolution limit and cannot be decoded therefore, as described in W02009/109614 and W02009/109653. But this effect can be circumvented, when using tracks with inverted pits being arranged as protrusions on the data layer. The active layer according to the invention has to cover therefore in particular the tracks comprising negative marks as depressions, but not the positive marks of the adjacent tracks. Hence, only the super-resolution signal originating from the tracks comprising negative marks as depressions is inverted, but not the super-resolution signal originating from the tracks comprising positive marks as protrusions.

An optical storage medium of this kind allows therefore to provide a high data storage capacity because the track pitch between adjacent tracks can be reduced below the diffraction limit of a corresponding pickup and a super-resolution layer with a phase-change material as the non-linear material can be used, wherein any interference problems between negative marks having a size below the optical resolution limit and negative marks having a size above the optical resolution limit are avoided by using an active layer arranged between the nonlinear layer and the data layer.

### BRIEF DESCRIPTION OF THE DRAWINGS

Preferred embodiments of the invention are explained in more detail below by way of example with reference to schematic drawings, which show:
- Fig. 1: an optical storage medium in a sectional view with a layer stack comprising a substrate, a data layer and a nonlinear layer,
- Fig. 2: spectral distributions of HF data signals of super-resolution discs comprising an AgInSbTe layer, respectively an InSb layer,
- Fig. 3: signal amplitudes of an AgInSbTe and an InSb super-resolution disc comprising each a sequence of 20 2T pits and 2T lands,
- Fig. 4: a calculated HF signal for a random sequence of pits and lands of a super-resolution disc comprising an InSb layer,
- Fig. 5: a calculated HF signal for a random sequence of pits and lands of a super-resolution disc comprising an AgInSbTe layer,
- Fig. 6: simulation results for 2T pits and lands of a super-resolution disc comprising an AgInSbTe nonlinear layer, wherein the data layer comprises an inverted pit/land data structure with positive marks represented as protrusions on the substrate layer,
- Fig. 7: an optical storage medium comprising tracks having negative marks as depressions,
- Fig. 8: an optical storage medium comprising tracks having positive marks as protrusions,
- Fig. 9: an optical storage medium comprising alternatingly tracks having only positive marks and spaces and tracks having only negative marks and spaces,
- Fig. 10: an optical storage medium in a sectional view with a layer stack according to the invention, and
- Figs. 11a, 11b: track structures with tracks being represented by one or two spirals on an optical disc.

### DETAILED DESCRIPTION OF PREFERRED EMBODIMENTS

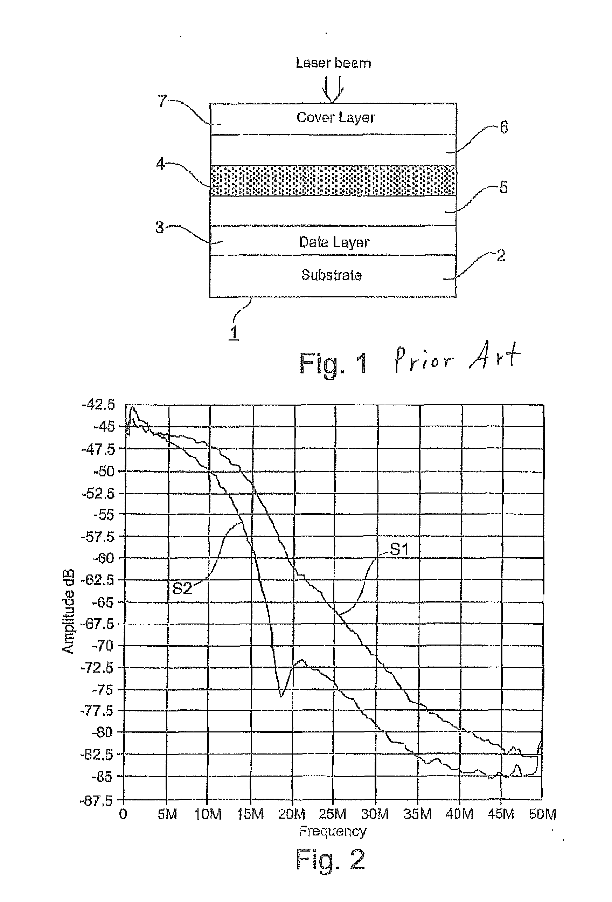

In Fig. 1 an optical storage medium 1 is shown in a cross section in a simplified manner. The optical storage medium 1 is in particular a read-only (ROM) optical storage disc. On a substrate 2 a data layer 3 is arranged which may comprise a reflective metallic layer, for example an aluminum layer. The data layer 3 has a data structure consisting of marks and spaces arranged on essentially parallel tracks. For a ROM disc, the marks and spaces consist of pits and lands, the pits being molded or embossed on the surface of substrate 2 for representing the data layer 3. On the data layer 3 a first dielectric layer 5 is arranged; and on the dielectric layer 5 a nonlinear layer 4 is arranged for providing the function of a mask layer for utilizing a super-resolution effect. The nonlinear layer 4 comprises in particular a super-resolution structure for providing the super-resolution effect, e.g. a super-resolution near-field structure (Super-RENS).

Above the nonlinear layer 4 a second dielectric layer 6 is disposed. As a further layer, a cover layer 7 is disposed on the second dielectric layer 6 as a protective layer. For reading the data of the data layer 3, a laser beam is applied in this embodiment from the top of the storage medium 1, penetrating first the cover layer 7. The optical storage medium 1 is in particular an optical disc having outside dimensions similar to DVDs and CDs. The first and second dielectric layers 5, 6 comprise for example the material 2nS-SiO₂. The substrate 2 and the cover layer 7 may consist of a plastic material, as known from DVDs and CDs. The layers of the storage medium 1 are arranged particularly as a layer stack.

The super-resolution effect allows detecting pits, which have a size, in particular a length, which is below the optical resolution limit of a corresponding apparatus for reading of the data of the optical storage medium. It has been demonstrated that the super-resolution detection of an optical disc comprising a phase-change material, also other materials like semiconductor materials, is related to a local change of the optical properties of the non-linear layer 4. For phase-change materials, for example AgInSbTe, it is assumed that the temperature increase due to the focussed laser spot is responsible for the super-resolution effect, which provides an aperture only in a small center of the laser spot. This is a priori due to a low thermal conductivity and a strong optical nonlinearity of the material.

This effect is also assumed for other chalcogenide materials, which comprise a chalcogenide element like sulphur, selenium, tellurium and one or several more electropositive elements like arsenic, germanium, phosphor or antimony. The chalcogenide materials are glasslike materials which show two stable phases, an amorphous and a crystalline phase. By heating a chalcogenide material with a high intensity laser beam, a phase transition from the crystalline to the amorphous phase is provided. For a super-resolution optical disc comprising a chalcogenide material, the intensity of the laser beam of a corresponding optical pickup is adjusted such, that only for a small center part of the laser spot on the storage medium a phase transition is provided for providing an "aperture type" super-resolution effect.

Also super-resolution discs comprising a semiconductor material as a super-resolution structure have been investigated, and in particular for III-V semiconductors having a low activation threshold, for example InSb, good results could be obtained. For the semiconductor materials, it is assumed that the high light intensity of a corresponding laser beam shifts electrons from the valence band to the conduction band, which increases the reflectivity of the semiconductor material. The change in reflectivity is dependent whether a pit or a land of the data layer is present in the near-field of the nonlinear layer.

With ROM discs comprising an alternating pattern of 80 nm pits and lands on the data layer, a carrier to noise ratio of about 40 db can be obtained for InSb as well as for AgInSbTe as the super-resolution structure, when a sufficiently high laser power is provided for triggering the super-resolution effect. Tests were made also with random pit/land patterns, for which a bit error rate of about 1.10⁻⁴ was obtained for the semi-conductor based InSb disc. But it was impossible to decode the data pattern on the phase-change based AgInSbTe disc.

When investigating the spectral distribution of high frequency (HF) data signals corresponding to random data patterns of super-resolution discs, a surprising effect was revealed for the discs with the AgInSbTe material, as shown in Fig. 2. Signal S1 is a spectral distribution of the HF signal of an InSb super-resolution disc, which shows a smooth decay for frequencies above 10 MHz. But for the disc with the AgInSbTe phase-change material, signal S2, a dip occurs at about 18 MHz, which frequency corresponds essentially with the optical resolution limit of the pickup. Also, at the frequency of 30,7 MHz, which corresponds with the HF signal of the 2T pits having a length of 80nm, the amplitude of signal S2 is about 7,5 db below the amplitude of signal S1. It seems therefore that for the AgInSbTe disc, an interference occurs between the detection of pits and lands having a size above the optical resolution limit and of pits and lands having a size below the optical resolution limit of the pickup, which reduces the detectability of the pits having a size below the optical resolution limit.

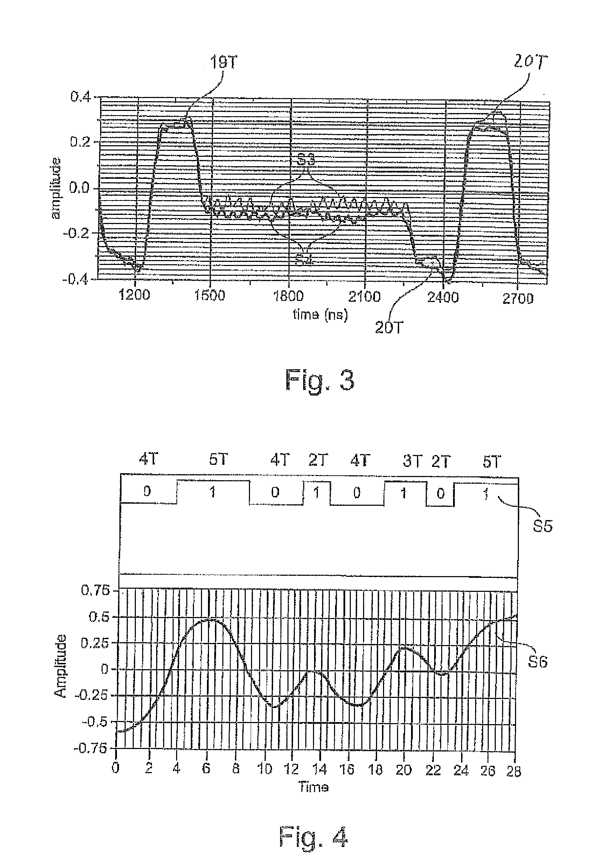

For obtaining the signals S1 and S2, super-resolution discs were used with a random data pattern with pits and lands based on a channel bit length of 40 nm. For the semiconductor based disc, a bit error rate as low as 1.10-4 was obtained while no decoding was possible for the disc with the AgInSbTe phase-change material. Otherwise, the disc with the AgInSbTe material showed a high carrier-to-noise ratio. To study this effect in more detail, super-resolution discs comprising a sequence of 20 pits with length of 2T=100nm, separated each by a 2T land, the 2T pits and lands being arranged between a 19T land and a 20T pit followed by a 20T land, were manufactured for both materials InSb and AgInSbTe. The results are shown in Fig. 3. As expected, for the pits and lands having a size above the optical resolution limit, the signal amplitude is much larger than for the pits and lands below the optical resolution limit. Also, the twenty 2T lands of the InSb disc show a higher reflectivity with regard to the 2T pits, signal S3, corresponding with the higher reflectivity of the 19T and 20T lands. The twenty 2T pits between the 19T land and the 20T pit are clearly resolved.

But the twenty 2T pits of the AIST disc, signal S4, show a worse behaviour: The two 19T and 20T lands show also a higher reflectivity, but the twenty 2T lands of the AgInSbTe disc show a lower reflectivity with regard to the 2T pits, in contrast with the 2T lands of the InSb disc, signal S3. Because of the inverted signal S4 of the 2T pits and lands, for the AgInSbTe disc only nineteen 2T pits can be resolved. Therefore, when a random sequence with data is provided having pits below the optical resolution limit and pits above the optical resolution limit, the data cannot be decoded correctly for an AgInSbTe disc.

To explain this behaviour, numerical simulations have been performed for aperture type super-resolution discs, i.e. AgInSbTe, with the result that the reflectivity increases for pits and decreases for lands when the pits and lands have a size below the optical resolution limit, and decreases for pits and increases for lands when they have a size above the optical resolution limit. When the pits have a size about the optical resolution limit, there is a competition between the diffractive readout responsible for the detection of the larger pits and the super-resolution mechanism responsible for the detection of the pits below the optical resolution limit. Therefore, the resulting signals of the 2T pits of the AgInSbTe super-resolution disc are inverted with regard to 20T pits, as can be seen in Fig. 3.

With regard to the super-resolution disc comprising an InSb layer, the results for the 2T pits are consistent with the diffractive readout of the pits having a size above the optical resolution limit. The reflectivity is increased for lands and decreased for pits, independently whether they have a size below or above the optical resolution limit, in agreement with the measurement of Fig. 3.

In Fig. 4, a calculated HF signal S6 is shown for a random sequence of pits and lands, graph S5, for a super-resolution disc comprising an InSb mask layer. The pits and lands of the graph S6 have a size from 2T to 5T as indicated, lands represented by a logical "1" and pits represented by "0". The simulation result, graph S6, shows a lower reflection amplitude for the pits having a size above and below the optical resolution limit, and show a higher reflection for lands of all sizes. Therefore, all pits can be clearly resolved and consequently detected by a pickup, when reading the data arranged on a track of an InSb super-resolution disc, graph S5.

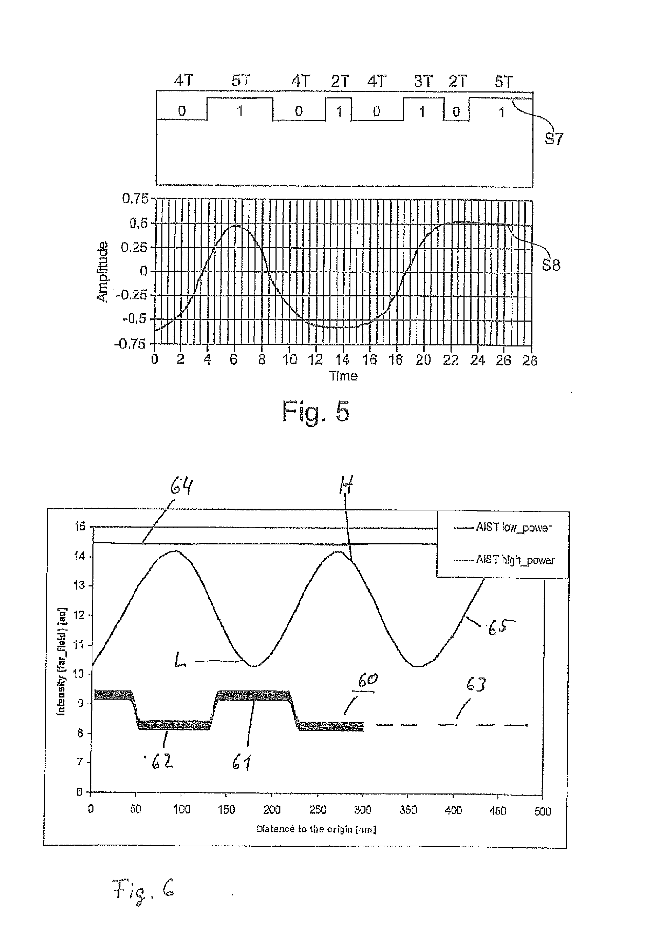

The situation for a super-resolution disc comprising an AgInSbTe mask layer as the super-resolution layer is shown in Fig. 5: The graph S7 corresponds with the same pit and land sequence of graph S5 of Fig. 4 and the signal S8 shows the respective calculated HF signal for the AgInSbTe disc. The 5T and 3T lands have a higher amplitude corresponding with a higher reflectivity and the 4T pits have a lower amplitude corresponding with a lower reflectivity. But the 2T land shows a lower reflectivity and the 2T pit shows a higher reflectivity, due to the inversion of the signal for pits and lands having a size below the optical resolution limit, as described above, and therefore, they cannot be decoded because their signal is included in the adjacent larger pits and lands. Correspondingly, the 2T pits and 2T lands of the data stream S7 cannot be resolved when arranged on an AgInSbTe super-resolution disc.

To overcome this problem for an optical storage medium having a nonlinear layer with a super-resolution structure, which comprises a material providing an inverted data signal for pits and lands having a size below the optical resolution limit with regard to the data signal for pits and lands having a size above the optical resolution limit, as described before, the data layer comprises an inverted pit/land data structure with pits represented as protrusions on the data layer.

For pits and lands having a size above the optical resolution limit, the data signal is independent on the data structure, whether the data structure has a non-inverted pit/land data structure with pits represented as depressions in the data layer, or whether it has an inverted pit/land data structure with pits represented as protrusions on the data layer. But for the pits and lands having a size below the optical resolution limit, the data signal is inverted for an inverted pit/land data structure, with regard to the non-inverted pit/land data structure. The data signal for the super-resolution pits depends on the pit/land data structure, because the super-resolution effect is located on the first encountered surface of the data layer.

The optical resolution limit of a pickup for reading data of the optical storage medium can be defined as lambda/4NA, wherein lambda is the laser wavelength of the pickup and NA the numerical aperture of the pickup. The pits and lands of the optical storage medium having a size below the optical resolution limit are in particular 2T and 3T pits and lands, or 2T pits and lands, depending on the data density of the optical storage medium, wherein T is the channel bit length.

For phase-change materials, in particular chalcogenide materials, for example GeSbTe or AgInSbTe, the data signal for pits and lands having a size below the optical resolution limit is inverted with regard to pits and lands having a size above the optical resolution limit, when using a non-inverted pit/land data structure. The 2T pits having a size below the optical resolution limit provide a "high" signal, when represented as depressions in a non-inverted pit/land data structure, but the 2T pits having a size below the optical resolution limit provide a "low" signal, when represented as protrusions in an inverted pit/land data structure. The data signal for pits and lands having a size below the optical resolution limit is therefore not inverted with regard to pits and lands having a size above the optical resolution limit, when using an inverted pit/land data structure.

In figure 6 results are shown of a simulation applied to an optical storage medium comprising a phase-change material as the super-resolution structure, which has a track 60 with an inverted pit/land data structure with 2T pits 61 and 2T lands 62, the pits 61 being represented as protrusions with regard to a reference plane 63, which is in this embodiment the plane of the substrate layer. A substrate layer with a data layer of this kind can be manufactured e.g. by using a stamper, which comprises a data structure with tracks, in which the 2T pits are arranged as depressions in the stamper, as well known in prior art.

The simulation shows, that the reflected light intensity 64 is high, when a low laser power is used for reading the data of the track 60 being not sufficient for providing the super-resolution effect. But when using a sufficiently high laser power for triggering the super-resolution effect of the phase-change material, the pits 61 and the lands 62 can be resolved, because the pits 61 provide a "low" signal L and the lands 62 a "high" signal H.

Because the pits having a size above the optical resolution limit provide also a "low" signal and the lands having a size above the optical resolution limit provide a "high" signal for the phase-change material, no destructive interference, as explained with regard to figure 2, occurs because the data signal of the 2T pits and lands 61, 62 have a similar intensity modulation as the pits and lands having a size above the optical resolution limit.

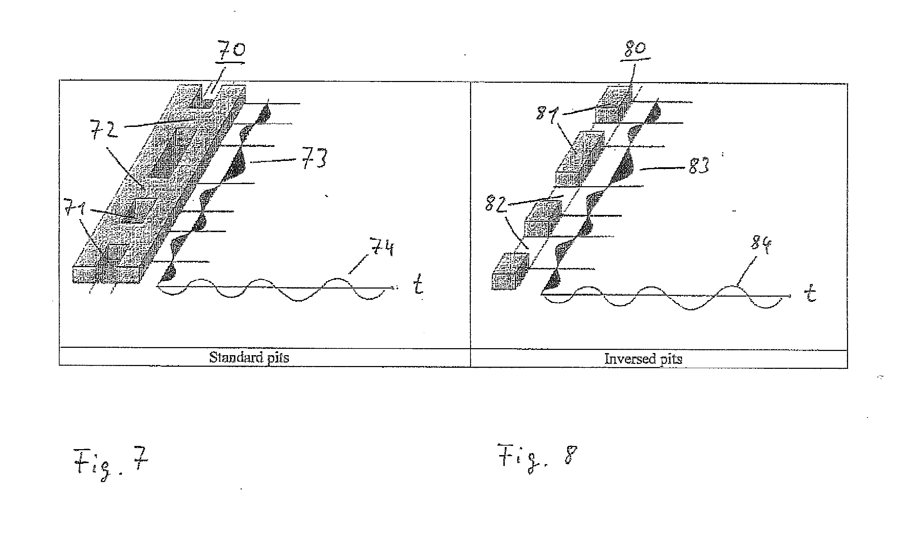

For present read only optical storage media, e.g. DVD ROM and CD, the reflected light has a lower intensity for the pits and a higher intensity for the lands, as shown in Fig. 7. When a laser beam of a pickup reads the data of a track 70 comprising pits 71 and lands 72, the reflected light is intensity modulated in time t because the reflected light from the pits 71 is reduced due to interference effects, as shown in graph 73. The depth of the pits 71 is in particular selected such, that a destructive interference between the reflected light from the pits 71 with the reflected light of the surrounding land area is optimized. The intensity modulation of the reflected light, graph 73, is converted in the pickup by a photo-detector into an electrical data signal, also called HF-signal 74.

When a standard read-only optical disc comprises an inverted pit/land data structure with pits represented as protrusions, as shown in Fig. 8, the reflected light intensity originating from the protrusions is lower, in correspondence with the optical storage medium shown in Fig. 7. Protrusions 81 being arranged on a substrate layer provide a lower reflected intensity with regard to lands 82 of a track 80, in correspondence with the pits 71, Fig. 7. This is based on the same interference effect, because due to the height of the protrusions 81 with regard to the surrounding substrate layer, a phase shift is provided between the reflected light of the protrusions 81 and the reflected light of the substrate layer such, that a destructive interference occurs. The intensity distribution 83 for the track 80 leads therefore to a data signal 84, which is essentially the same as the data signal 74 of Fig. 7.

Therefore, when using a data layer 3 comprising an inverted pit/land data structure with pits represented as protrusions on the substrate layer for an optical storage medium comprising a nonlinear layer 4 with a super-resolution structure being a phase-change material, the signals coming from the super-resolution pits and lands provide a data signal being in correspondence with the data signal coming from the pits and lands having a size above the optical resolution limit. With the inverted pit/land data structure, decoding of the super-resolution pits and lands is possible and the bit error rate of the data signal of a super-resolution optical storage medium can be essentially reduced.

With the super-resolution effect, the resolution of an optical pickup can be increased in track direction by a considerable amount, for example by a factor of two or three. This allows a reduction of the size of the marks and spaces of the tracks on the optical disc in track direction. But the Super-RENS effect as such does not allow to reduce the track pitch below the optical resolution limit of the pickup. If a push-pull effect is used for the tracking regulation of the optical pickup, the reduction of the track pitch is limited by the fact that the first order refracted beams have to be collected by the objective lens. Otherwise there is no push-pull signal, because this signal is generated by the interference of the 0^{th} order and the 1^{st} order beams as reflected from the optical storage medium. For a Blu-Ray pickup this occurs at a track pitch of about 280 nm. The standard track pitch of a Blu-Ray disc is 320 nm.

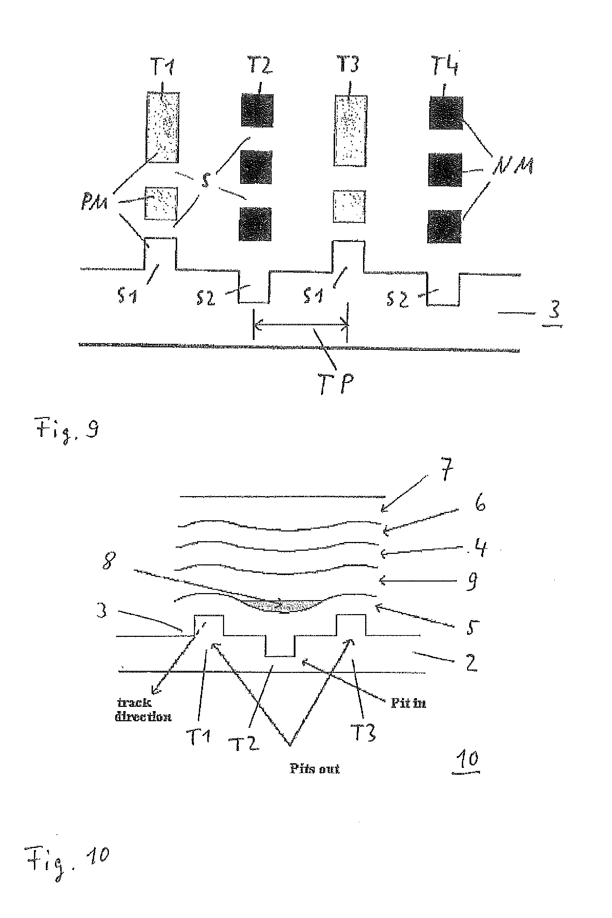

To overcome this problem, the pit structure of the data layer 3, or in general the mark/space data structure, is inverted for every second track, as shown in figure 9. The tracks T1 - T4 comprise positive and negative marks, which are alternating from one track to the next track such that a first track T1 comprises positive marks PM resembling protrusions, and the neighboring second track T2 comprises negative marks NM being consistent with depressions. The positive marks and the negative marks may represent for example a logical "1" and the spaces between the marks a logical "0" of the data structure of the tracks T1-T4.

By using such a data structure with inverted marks for every adjacent track, the effective period of the track pitch is doubled, and therefore a push-pull signal can be seen, even when the track pitch TP is reduced by a factor of two between two adjacent tracks, with regard to a conventional Blu-Ray ROM disc. A conventional Blu-Ray ROM disc may have either positive marks resembling protrusions or negative marks resembling depressions, but never a mixture of both protrusions and depressions for the marks. For a Super-RENS disc designed for operating with a Blu-Ray type pickup, the track pitch TP can be reduced therefore up to about 160 nm, because the pickup sees for the tracking regulation now a periodic track structure with track pitch 2T, when applying a track structure in accordance with figure 9.

The tracks T1 - T4 of the optical storage medium as shown in figure 9, which represent only a small section of the optical storage medium, are arranged in a preferred embodiment as two spirals S1, S2, one spiral S1 consisting of positive marks PM and spaces s only and the spiral S2 being interleaved with spiral S1 and consisting of negative marks NM and spaces s only.

For producing a read-only optical storage medium, in particular a disc having a track structure as explained with regard to figure 9, a stamper is required, which comprises corresponding tracks with protrusions and depressions being inverted with regard to the mark/space structure of the read-only storage medium to be produced:

For a production of a stamper of this kind, reference is made to WO08/046777, which is incorporated by reference herewith.

According to the invention, an optical storage medium 10 providing a high data capacity comprises advantageously a substrate layer 2 with a read-only data layer 3 having tracks with positive marks provided as protrusions and tracks with negative marks provided as depressions, a cover layer 7, a super-resolution layer 4 arranged between the cover layer 7 and the data layer 3, the super-resolution layer 4 including a phase-change material as the nonlinear material, and an active layer 8 arranged between the super resolution layer 4 and the data layer 3, as shown in figure 10, wherein the track pitch between adjacent tracks T1, T2 is below the diffraction limit of a corresponding pickup for reading of the data. Adjacent tracks T1, T2, T3, ... comprise in particular alternatingly only positive marks and spaces, e.g. tracks T1, T3, and tracks with only negative marks and spaces, e.g. track T2. The active layer 8 covers completely the tracks comprising the negative marks, e.g. track T2, but does not cover the positive marks of the adjacent tracks, e.g. tracks T1 and T3. The active layer 8 has therefore the effect that the super-resolution signal is inversed, as provided by the negative marks and spaces being below the optical resolution limit of the pickup, but not of the super-resolution signal as provided by the positive marks and spaces, e.g. uneven tracks T1, T3.

The optical storage medium 10 comprises in a further aspect of the invention a first dielectric layer 5 arranged between the data layer 3 and the active layer 8 and/or a second dielectric layer 6 arranged between the super resolution layer 4 and the cover layer 7. It may comprise further an interface layer 9 arranged between the super-resolution layer 4 and the active layer 8. The interface layer 9 may comprise for example a dielectric material or a metal-like material for improving the interaction between the super resolution layer 4 and the active layer 8 and/or for a protection of the super resolution layer 4.

The active layer 8 comprises advantageously a semiconductor material having an increased reflectivity when irradiated with a laser beam, e.g. InAs or InSb. With an active layer of this kind, the inverting mechanism of the phase-change material of the super resolution layer 4 is no more active, because now only the high intensity center beam of the pickup is able to penetrate the super resolution layer 4, but the data signal of the negative marks and spaces of the even tracks, e.g. track T2, is provided by the interaction with the semiconductor material of the active layer 8, which does not inverse the super resolution signal. Because the active layer 8 does not cover the uneven tracks T1, T3 with the positive marks, the correct super-resolution signal is already provided for these tracks.

For manufacturing an optical storage medium in accordance with figure 10, first the read-only data layer 3 with tracks T1, T2 ... is provided on the substrate layer 2 by using a stamper. Then, in a further step, the first dielectric layer 5, which has in particular a homogenous thickness, is arranged on the data layer 3 by using a sputtering technique. With this process, groves are formed between the tracks T1, T3 comprising positive marks, which grooves correspond with the interleaved adjacent tracks comprising negative marks, e.g. track T2.

In a further step, the active layer 8 is deposited on the dielectric layer 5 by using a damascene process. The damascene process allows to deposit the material of the active layer 8 only in the groves corresponding with the tracks having negative marks by using a chemical mechanical polishing, by which remaining material of the active layer above the tracks with the positive marks, uneven tracks T1, T3, ..., is removed. A fabrication of read-only optical discs using a damascene process is described by Anzai et al, Japanese Journal of Applied Physics, Vol. 46, No. 6b, 2007, pp 3917-3921, which describes an application for embedding a super-resolution material in the pits of a substrate of an optical disc. Anzai et al describe that a phase-change material, e.g. GeSbTe, can be deposited only in the pits of the data layer by sputtering first the phase-change material onto the data layer and removing in a further step excess phase-change material by using a polishing pad and a colloidal liquid, with which the phase-change material not being deposited inside the pits is removed. In addition, a protective dielectric layer comprising Al₂O₃ may be provided between the data layer and the phase-change layer such that after polishing, the phase-change material above the lands is completely polished and the pits comprising the phase-change material are surrounded by the protective layer.

Chemical mechanical polishing is a common technique for manufacturing semiconductor devices, but also materials used for optical discs, deposited on a polycarbonate substrate, can be polished as shown by Anzai et al. The damascene process can be used therefore for depositing the material of the active layer only in the groves corresponding with the tracks comprising only negative marks. Excess material covering the positive marks of the adjacent tracks can be removed completely by polishing. Any material remaining in the lands between the positive marks, which lands appear as a depression in track direction with regard to the positive marks, does not modify the super resolution signal of the tracks having the positive marks, because all material of the active layer 8 above the positive marks is removed. In further steps, subsequently the interface layer 9 is deposited on the optical disc 10, the super resolution layer 4, the second dielectric layer 6 and the cover layer 7. The active layer 8 is therefore an inhomogeneous layer, in contrast with the homogeneous layers 4-7 and 9 having a constant thickness.

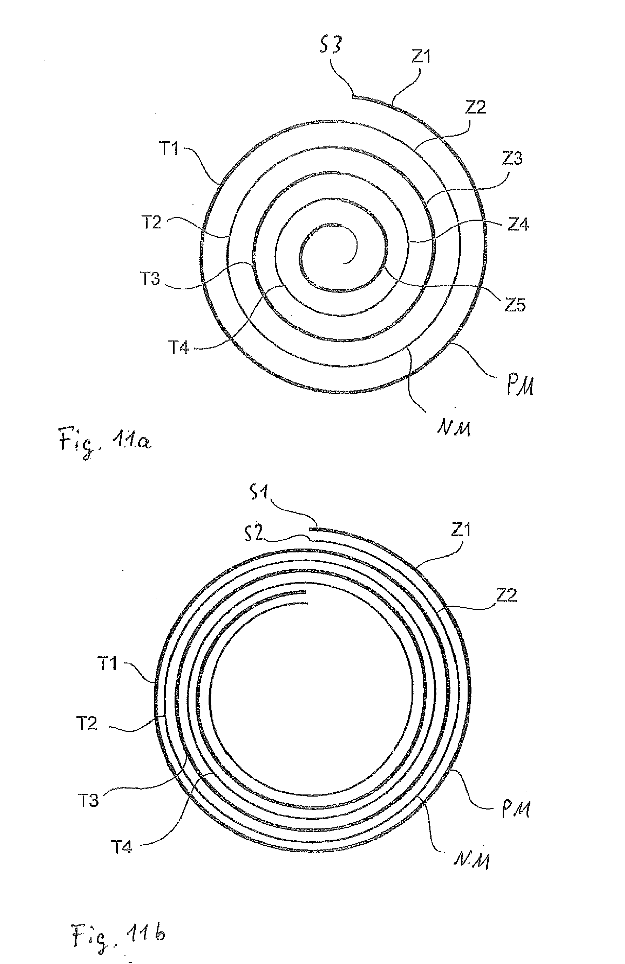

The track structure according to figures 9 and 10 may be arranged on an optical disc in form of spirals, as known from a DVD or a Blu-Ray disc, or in form of circular rings or segments of circular rings, as known from a DVD-RAM. In figure 11a an embodiment of a track structure is shown in a simplified manner, in which tracks T1 - T4, ... are represented by one single spiral S3 on an optical disc. To provide the requirement that for consecutive adjacent tracks, the structure of the tracks changes periodically between tracks having positive marks and spaces and tracks having negative marks and spaces, the spiral S3 consists of segments Z1, Z3, Z5, ... comprising tracks with positive marks PM, indicated by fat line segments, and interleaved sequences Z2, Z4, ... comprising tracks with negative marks NM, indicated by thin line segments. When the length of each of the segments Z1 - Z5 has the length of one revolution respectively 360°, the requirement is fulfilled, that the structure of the marks and spaces changes periodically for consecutive adjacent tracks, as shown in figure 11a.

Another preferred embodiment of the optical storage medium 10 is shown in figure 11b in a simplified manner, in which tracks T1 - T4, ... are arranged as two spirals S1, S2 on an optical disc. The first spiral S1 comprises only positive marks PM and spaces and the second spiral S2 comprises only negative marks NM and spaces. The first spiral S1 is interleaved with the second spiral S2 such, that the tracks T1, T3 belong to the first spiral S1 and the tracks T2, T4 belong to the second spiral S2. An optical storage medium as described with regard to figures 11a, 11b is disclosed for example in WO 2008/046777.

The optical storage medium 10 may be designed advantageously for operation with an apparatus comprising a pickup with a Blu-ray type optics providing a laser beam with a wavelength λ=405nm and having a numerical aperture NA=0,85. The track pitch TP of adjacent tracks of the storage medium 10 is in particular below the respective diffraction limit of λ/2*NA = 238nm of the pickup, for example 160 or 200nm. Because of the varying pit geometry, for the tracking regulation then only the periodic structure of tracks of same pit geometry is relevant, corresponding with the distance 2TP being above the diffraction limit of λ/2*NA.

Also other embodiments of the invention can be utilized by a person skilled in the art without departing from the spirit and scope of the present invention. The invention resides therefore in the claims herein after appended.

## Claims

1. Optical storage medium (10) comprising a substrate layer (2),
a read-only data layer (3) with a mark/space structure arranged in tracks (T1-T4) on the substrate layer (2), wherein alternatingly one track (T1, T3) comprises positive marks (PM) as protrusions and an adjacent track (T2, T4) comprises negative marks (NM) as depressions,
a cover layer (7), and
a super-resolution layer (4) arranged between the data layer (3) and the cover layer (7), the super-resolution layer (4) comprising a nonlinear material providing a destructive interference for negative marks (NM) and lands having a size below the optical resolution limit (2T) with regard to negative marks (NM) and lands having a size above the optical resolution limit (4T, 5T), **characterized in that**
an active layer (8) is arranged between the data layer (3) and the nonlinear layer (4), which active layer (8) covers only tracks (T2, T4) comprising negative marks (NM).

2. The optical storage medium of claim 1, wherein the active layer (8) is an inhomogeneous layer manufactured by using a damascene process.

3. The optical storage medium of claim 2, wherein the active layer (8) comprises a semiconductor material having an increased reflectivity, when irradiated with a laser beam.

4. The optical storage medium of claim 3, wherein the semiconductor material is one of the III-V semiconductor family, for example GaSb or an indium alloy, for example InAs or InSb.

5. The optical storage medium according to one of the preceding claims, wherein the active layer (8) comprises a reflecting material, for example a highly reflective metal like aluminum or silver.

6. The optical storage medium according to one of the preceding claims, wherein the nonlinear material comprises a phase-change material, for example a chalcogenide material like GeSbTe or AgInSbTe.

7. Optical storage medium according to one of the preceding claims, comprising a first dielectric layer (5) disposed between the data layer (3) and the active layer (8), and/or a second dielectric layer (6) between the super-resolution layer (4) and the cover layer (7), and/or an interface layer (9) between the active layer (8) and the super-resolution layer (4), wherein the dielectric layers (5,6), the active layer (8), the super-resolution layer (4), the interface layer (9) and the cover layer (7) are homogenous layers having essentially a constant thickness.

8. The optical storage medium according to one of the preceding claims, wherein the super-resolution layer (4) provides the function of a mask layer for the data layer (3) and the active layer (8).

9. Optical storage medium according to one of the preceding claims, wherein the marks (4T, 5T) having a size above the optical resolution limit provide a "low" signal when irradiated with a laser beam, and marks (2T) having a size below the optical resolution limit provide also a "low" signal when irradiated with a laser beam.

10. Optical storage medium according to one of the preceding claims, wherein the marks and spaces of a track having a size below the optical resolution limit are 2T and/or 3T marks and spaces, wherein T is a channel bit length.

11. The optical storage medium according to one of the preceding claims, wherein the track pitch of two adjacent tracks (T1, T2) is below the optical resolution limit of an optical pickup usable for reading data of the optical storage medium.

12. The optical storage medium according to claim 11, wherein the track pitch between two adjacent tracks (T1, T2) is within a range of 140-250 nm for use with a Blu-Ray type pickup.

13. Optical storage medium according to one of the preceding claims, wherein the optical resolution limit of a pickup for reading of the data is defined as lambda/4NA, lambda being a laser wavelength and NA a numerical aperture of the pickup.

14. The optical storage medium according to one of the preceding claims, wherein the tracks are arranged as spirals (S1, S2) and wherein one spiral (S1) comprises only positive marks (PM) and spaces, and the second spiral (S2) being interleaved with the first spiral (S1) comprises only negative marks (NM) and spaces.

15. The optical storage medium according to one of the preceding claims, wherein active layer (8) covers completely only tracks (T2, T4) comprising depressions (NM), but not protrusions (PM) of adjacent tracks (T1, T3).
